# EUROPEAN PATENT SPECIFICATION

(11) **EP 1 756 719 B1**
(45) Date of publication and mention of the grant of the patent: **16.07.2014**
(21) Application number: 05749193.8
(22) Date of filing: 17.05.2005
(51) Int. Cl.: H04L 29/12, H04L 12/761, H04L 12/18

(54) **DATA COMMUNICATION SYSTEM, ROUTER AND METHOD FOR ROUTING DATA**
DATENKOMMUNIKATIONSSYSTEM, ROUTER UND VERFAHREN ZUM ROUTEN VON DATEN
SYSTEME DE TRANSMISSION DE DONNEES, ROUTEUR ET PROCEDE DE ROUTAGE DE DONNEES

(30) Priority: 18.05.2004 GB 0411044
(43) Date of publication of application: 28.02.2007
(73) Proprietor: Motorola Solutions, Inc., Schaumburg IL 60196 (US)
(72) Inventor: EDWARDS, Mark, Basingstoke, Hampshire RG22 4PD (GB); FRANDSEN, Svend, DK-2600 Glostrup (DK)
(74) Representative: Treleven, Colin
(86) International application number: PCT/US2005/017365
(87) International publication number: WO 2005/114431

(56) References cited:
- WO-A-02/03614
- US-A1- 2002 021 697
- US-A1- 2004 100 983
- US-A1- 2005 044 142
- US-A1- 2006 039 388
- US-B1- 6 181 697
- US-B1- 6 397 255
- JORGE MIGUEL CARDOSO: 'RE: what is the meaning of "UDP Helper"?', [Online] 26 April 2001, pages 1 - 2, XP055035965 Retrieved from the Internet: <URL:http://www.ietf.org/mail-archive/web/i etf/current/msg17409.html> [retrieved on 2012-08-21]
- 'IP Multicast Helper Maps' 01 January 2001, pages 49 - 55, XP055035944

## Description

### Field of the Invention

This invention relates to addressing and routeing of data packets in data communication systems. The invention is applicable to, but not limited to, multicast data communication systems that employ unicast-capable equipment.

### Background of the Invention

Present day communication systems, both wireless and wire-line, have a requirement to transfer data between communication units. Data, in this context, includes many forms of communication such as speech, multimedia, signalling information, etc. Such data communication needs to be effectively and efficiently routed, in order to optimise use of limited communication resources.

For data to be transferred across data communication networks, a communication unit addressing protocol is required. The communication units are generally allocated addresses that are read by a communication bridge, gateway and/or router, in order to determine how to transfer the data to the addressed unit. The interconnection between networks is generally known as internetworking (or internet).

Networks are often divided into sub-networks, with protocols being set up to define a set of rules that allow the orderly exchange of information. Currently, the two most popular protocols used to transfer data in communications systems are: Transmission Control Protocol (TCP) and Internet Protocol (IP). IP corresponds to data transfer in the network layer of the well-known OSI model and TCP corresponds to data transfer in the transport layer of the OSI model. Their operation is transparent to the physical and data link layers and can thus be used on any of the standard cabling networks such as Ethernet, FDDI or token ring.

IP multicast capable routers and associated hosts are a relatively new technology in the data transfer marketplace. Several competing multicast protocol standards have been published within the last few years. However, broadcast multimedia services on the Internet have only started to become widely available in the last few years. These services make use of routers within the Internet that are capable of supporting IP 'multicast' protocols. However, multicast capable routers are rarely compatible with each other due primarily to legacy issues, i.e. a number of non-multicast-capable routers exist in networks with many IP hosts that are multicast-capable.

Multicasting is a process where a single source can send data efficiently to multiple receivers. There are some applications where it is useful to filter multicast data packets through a router for forwarding to a non-multicast host. For example, in a network carrying traffic for many multicast channels, there might be a need to log the multicast traffic, say for monitoring or surveillance purposes as a record of voice communications in the network. A number of problems emanate from such a scenario, for example:
(i) It is unlikely that logging equipment is available that complies with the required multicast protocol;
(ii) It might not be possible to route the multicast traffic from the network where a logging event occurs, to the place at which the logging equipment is located; and
(iii) Only a subset of all the multicast traffic passing through the router may be of a type that needs to be logged.

The inventors of the present invention have recognised and appreciated another example where it would be useful to filter multicast packets onto a unicast channel. Such a scenario would be where a remote connection is made to a host, such that the multicast channel is effectively used over the remote link as a point-to-point connection. This is a very inefficient use of link and processor bandwidth. Automatically converting the communication channel from multicast to unicast would reduce this inefficiency.

It is known that a standard router (i.e. one that is incapable of handling multicast messages) has a routing application that will route packets between input and output ports based on the destination IP address (or at least a portion of it) contained within the IP packet header. This destination address is of a format that defines it as a unicast address. Hence, the router knows exactly how to route the packet as soon as that packet arrives and the IP header has been decoded. In other words, a standard unicast router only needs to worry about the value of the destination IP address in the received packet in order to perform its onward routing function. This is unlike a router handling a multicast packet, which also needs to know about the state of the connection identified by the multicast address.

Therefore, solving the need to provide IP multicasting with today's, predominantly unicast, technology is both difficult and complex. Some of the problems that a designer may encounter are:
(i) For the router to perform packet filtering on multicast packets, the router must itself be multicast-capable and maintain multicast states. In general, many routers are not multicast capable.
(ii) The router must maintain multicast signalling with a multicast-capable host on the destination local area network (LAN) in order to filter the requested multicast packets.
(iii) A standard (non-multicast capable) IP host monitoring a network connection is typically configured to either:
   (a) Only accept IP packets addressed to a specific IP address (i.e. its own IP address), or
   (b) To accept all IP packets that pass through it.

Hence, such a host connected to a network that carries multiple channels of multicast traffic will not accept any of these data packets. If the IP host is configured to only accept data packets addressed to its own IP address, then all multicast data packets are ignored because they do not match the host's own IP address. If the IP host is configured to accept all possible data packets, then it risks being flooded by more packets than it can handle, even though some of these packets might not require to be logged, if logging is the desired application.

One type of filter commonly available is the universal data protocol (UDP) helper, which looks for broadcast IP data packets sent to a specific UDP port. In this context, the 'port' identifies the application that is sending or receiving the IP data packet, i.e. it is distinct from the 'address' itself. Transport communication protocol (TCP) and UDP identify applications using 16-bit port numbers, e.g. file transfer protocol (FTP) servers provide the FTP service on TCP port '21'. Trivial File Transfer Protocol (TFTP) servers provide service on UDP port '69'. TFTP is a simpler form of FTP that runs over UDP instead of maintaining TCP connections. When the UDP helper finds such packets it routes them onto another LAN, replacing the broadcast address with a unicast forwarding address. Unfortunately, a UDP Helper will only work for packets containing the unique Broadcast IP destination address. No UDP Helper has yet been developed that will work for packets containing a multicast IP destination address.

An alternative approach to filtering the multicast traffic would be to configure the logging host such that it is aware of all the multicast channels in use, and then actively join each of these channels in order to receive the multicast data packets. The major problem here is that, in a large communication network, there could be thousands of active multicast channels. In this case it is likely that the logging host would not have enough processing power to send a 'keep-alive' multicast signalling message often enough to every channel. Consequently the network's multicast routers would 'drop' the logging host from the multicast trees, i.e. the logging host's multicast channel connections would be cleared down.

Again, a further problem here is that there is more than one multicast protocol standard, so potentially such a solution would have to be designed for each multicast protocol in existence.

A need therefore exists for a mechanism to support multicast services in a mixed multicast-unicast data communication system wherein the abovementioned disadvantages associated with prior art arrangements may be alleviated.

US 6,181,697 describes a system and method for allowing an endpoint client on a unicast network to gain access to a multicast session on a multicast network. A processor is arranged to receive a multicast data packet, to decode the packet and to translate a multicast address of the data packet into a one or more unicast addresses.

US 2002/0021697 describes a method and apparatus for routing a multicast packet. The method and apparatus provide multicast communication between an IPv4 terminal and an IPv6 terminal. A protocol conversion takes place in the packet delivery procedure. Source addresses of delivered multicast packets are converted to unicast form by reference to an address holding module.

US 6,397,255 describes a system and method for providing intelligent network services. A redirector is employed to determine a most appropriate network software destination based on a received network request and to redirect data packets accordingly. The use of multicast to unicast address translation in the redirection procedure is described.

The IETF e-mail dated April 25, 2001 and entitled "What is the meaning of 'UDP Helper'?" describes a way to forward a DHCP broadcast request across a wide area network (WAN) so that a client in one network can receive an IP address from a DHCP server in a remote second network.

### Statement of Invention

In accordance with a first aspect of the present invention, there is provided a data router in accordance with claim 1 of the accompanying claims. In accordance with a second aspect of the present invention, there is provided a method as defined in claim 10 of the accompanying claims. In accordance with a third aspect of the present invention, there is provided a data communication system as defined in claim 13 of the accompanying claims.

Preferably, the router of the first aspect is operable to determine whether a destination multicast channel from the decoded at least one data packet matches one or more of the router's multicast channel(s), and/or determining whether a protocol port from the decoded at least one data packet matches one or more of the router's port(s). If there is a match, the destination multicast address is replaced with one or more destination unicast address(es).

Preferably, the router decodes and translates internet protocol (IP) addresses based on the content of the IP header of the received at least one data packet. In addition, the processor preferably comprises a multicast helper function, for example a universal data protocol multicast helper function, operably coupled to a memory element configured with multiple forwarding unicast addresses. Advantageously, the multicast helper function is configured to modify a layer-2 medium access control stack of the router so that a substantial number of incoming data packets have their addresses overwritten with a broadcast address, for example an Ethernet broadcast address. In this manner, a router is able to 'spoof' a MAC address on a received data packet to make it appear like a broadcast address when it is delivered to the multicast helper function.

Furthermore, it is envisaged that the processor may translate a multicast address of the decoded at least one multicast data packet into one or more unicast addresses based on a protocol and/or one or more port address(es) and/or a source address of the received data packet.

Further features of the present invention are as defined in the dependent claims.

### Brief Description of the Drawings

Illustrative mbodiments of the present invention will now be described with reference to the accompanying drawings, in which:
FIG. 1 schematically illustrates a data communication system in which embodiments of the invention may be implemented;
FIG. 2 illustrates a functional block diagram of a router, adapted in accordance with the preferred embodiment of the present invention; and
FIG. 3 illustrates a flowchart of a mechanism to support multicast services in a mixed multicast-unicast data communication system, in accordance with a preferred embodiment of the present invention.

### Description of Preferred Embodiments

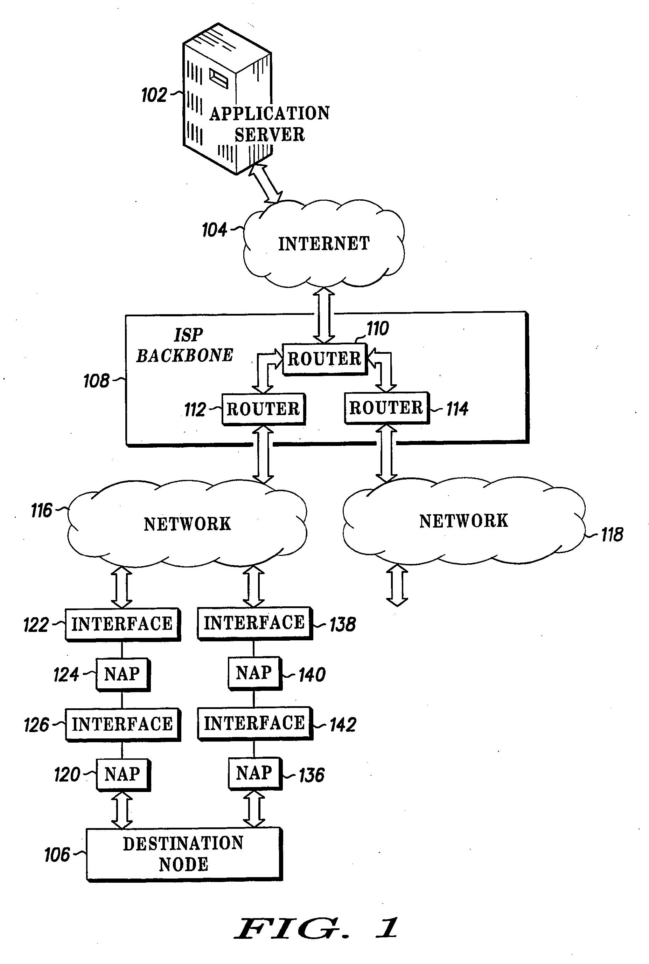

FIG. 1 schematically illustrates a data communication system 100 in which embodiments of the invention may be implemented. The data communication system 100 provides a duplex data flow route between an application server 102 (which may for example also be termed a correspondent host) linked to the Internet 104 and a destination node 106. The destination node 106 receives service via an Internet service provider (ISP), which provides an ISP backbone 108, of which, for clarity, only three routers 110, 112 and 114 are shown by way of example in FIG. 1. Router 110 is coupled to the Internet 104, and also to the other routers 112 and 114.

Router 112 is coupled to a first subnet 116. Router 114 is coupled to a second subnet 118. In this embodiment the subnets 116, 118 are IP subnets.

The current situation shown in FIG. 1 is that the duplex data flow between the application server 102 and Internet 104 and the destination node 106 is currently routed through a first access network 120. In more detail, the first subnet 116 is coupled to a first interface 122 of a first network access point (NAP) 124. A second interface 126 of the first NAP 124 is coupled to the first access network 120.

FIG. 1 further shows a second access network 136 through which the duplex data flow may instead be routed. In more detail, the first subnet 116 is coupled to a first interface 138 of a second NAP 140. A second interface 42 of the second NAP 140 is coupled to the second access network 136. In the preferred embodiment of the present invention, either one or both of the connections between the destination node 106 and the respective access networks 120, 136 may be by means of a wireless, for example mobile IP, or non-wireless access network, for example Ethernet.

It is noted that no routing through the second subnet 118 is involved in the processes to be described below. However, subnet 118 is included in FIG. 1 for the sake of completeness to emphasise the range of potential routing operations.

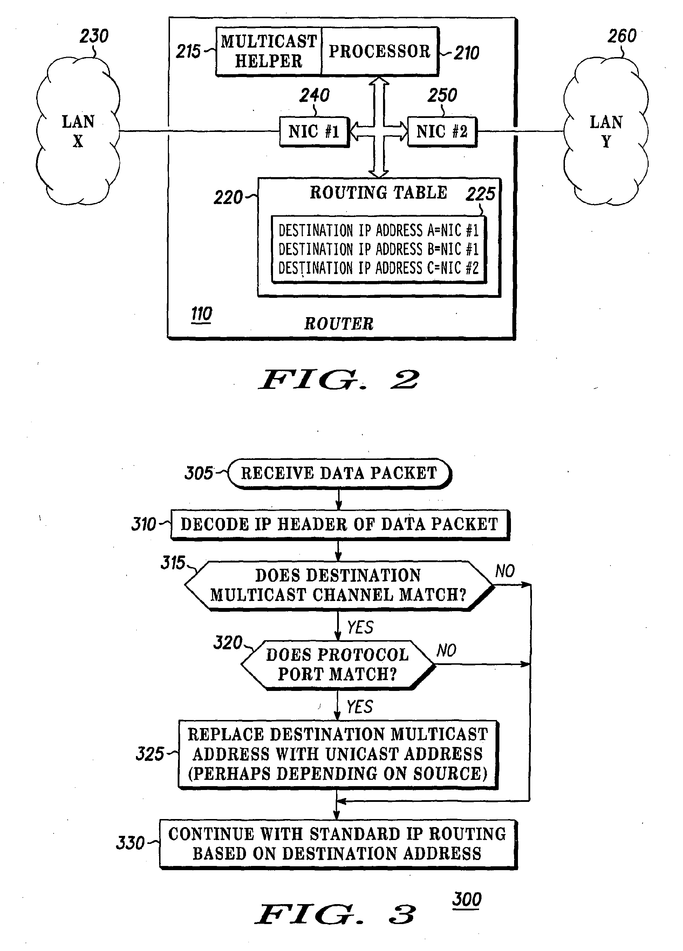

In accordance with a preferred embodiment of the present invention, one or more routers in the data communication system have been adapted to incorporate a new router application, hereinafter referred to as a Multicast Helper function. Referring now to FIG. 2, a router 110 is illustrated where a processor 210 is configured to run one or more software processes to perform the Multicast Helper function 215. The Multicast Helper function 215 filters multicast packets based on IP header fields (e.g. source address, protocol, port number, multicast channel). Notably, the Multicast Helper function 215 converts the destination multicast address into an IP unicast address and forwards these packets to the intended recipient(s).

Advantageously, the Multicast Helper function 215 does not need to understand anything about which IP multicast protocol is in use, since it acts entirely on matching the contents of the IP header's destination address with a table of IP multicast addresses. In this regard, a memory element 220 is operably coupled to the processor 210 within the router 110 and has been adapted to store the table of IP multicast addresses 225.

In other words, a Multicast Helper function 215, preferably in the form of a software application resident in an IP router 110, has been configured to receive multicast packets from the IP stack on one port and filter those packets before forwarding them to the IP stack on another port.

FIG. 2 illustrates how a normal routing application works. The router 110 receives IP packets from local area network (LAN) 'X' 230 through the Network Interface Card (NIC) #1 240. The processor 210 extracts the destination IP address from the received IP packet and then looks for a match between the extracted address and the contents of its routing table 220. If a match is found, this indicates to the processor 210 the identity of the NIC card, say NIC#2 250 to which it should forward the IP packet for onward transmission to LAN 'Y' 260.

Notably, the Multicast Helper function 215 according to the preferred embodiment of the present invention is configured to accept all these packets, regardless of whether they are multicast addressed or not, and then forward these packets to a new unicast address that is dependent on the UDP port number of the received packet.

Thus, in summary, a known multicast capable router typically supports sophisticated routing protocols to help it build a routing table capable of forwarding inbound multicast IP packets to the correct outbound ports. The multicast routing table is built up in real time by the router receiving special request commands from multicast capable hosts that wish to register to receive these multicast packets. The underlying assumption is that the router should only forward received multicast packets to multicast capable hosts that have requested them.

In contrast to this known methodology, the multicast capable router of the preferred embodiment of the present invention incorporates an additional feature in that the router's routing table 220 can be modified so that a subset of received multicast packets can be forwarded to a specific host IP address, even though that host has not requested them.

The concept of forwarding multicast packets onto a route that has not registered multicast group members, and performing this action whilst translating the destination address from a multicast address to a unicast address, is particularly advantageous. Packets arriving at the router, which could only be received and processed by specialised hosts can how be received by any specified general-purpose IP host.

An added advantage is that the Multicast Helper function 215 makes the IP data packet much more routeable. This is because a multicast data packet could previously only be routed by specialised routers, whereas a unicast packet could previously be routed anywhere within an IP network. The benefit of employing the present invention is that it allows the contents of the multicast data packet to be routed to any destination IP address, irrespective of whether it is a multicast or unicast data packet.

Referring now to FIG. 3, a flowchart 300 illustrates a preferred process of a Multicast Helper function, in accordance with the preferred embodiment of the present invention. The following table is to be read in conjuction with FIG. 3.

| Destination multicast channel | Protocol Port | Destination Unicast address |
|---|---|---|
| 224.30.10.6 | UDP:69 | 10.172.0.60 |
| 224.33.12.4 | TCP:21 | 145.16.5.31 |

The process in FIG. 3 starts by receiving a data (IP) packet in step 305 and decoding the IP header in step 310. A determination is then made as to whether a destination multicast channel from the decoded data matches one or more of the router's multicast channel(s), as shown in step 315. If the destination multicast channel from the decoded data matches one or more of the router's multicast channel(s) in step 315, a determination is made as to whether there is a protocol port match, as shown in step 320.

If there is both a destination multicast channel match in step 315 and a protocol port match in step 320, then the destination multicast channel is replaced with one or more destination unicast address(es), as shown in step 325.

Thereafter, or if either a destination multicast channel match is not found in step 315 or a protocol port match is not found in step 320, the standard IP routing operation is continued based on destination addresses, as shown in step 330.

In an enhanced embodiment of the present invention, a Multicast Helper function, such as an UDP Multicast Helper function, can be configured with multiple forwarding unicast addresses, such that the packet can be forwarded to a different host depending on the multicast packet's source IP address, in step 325. It is envisaged that, by implementing this enhanced embodiment, it is possible to load share amongst the monitoring hosts, which is particularly advantageous when a large volume of multicast packets from a variety of sources are to be forwarded, i.e. if the rate at which the helper forwards packets exceeds a rate that a single IP host can handle the packets.

A common router implementation is for the Network Interface Cards (NICs) to connect onto Ethernet LANs. This allows the router to send and receive its IP data packets over the Ethernet connection. However, IP data packets use 32-bit destination address field whilst the Ethernet protocol uses a 48-bit destination address field (i.e. a medium access control (MAC) layer address). The Ethernet controller hardware in the NIC is configured to only accept received Ethernet packets addressed to its own MAC layer address; where the MAC protocol stack in the router will double check the MAC address contained in the Ethernet packet it receives, to make sure it was addressed to its MAC address. If there is a mis-match then the data packet will be rejected. An exception to this general rule relates to the Ethernet Broadcast MAC address, which the NIC hardware and protocol stack should also accept.

Thus, in a yet further enhanced embodiment of the present invention, it is envisaged that the mechanism can be implemented by making the following simple modifications to a standard router that employs, say, a broadcast UDP helper agent. First, the NIC, or say an Ethernet controller chip embedded within the NIC, can be configured to receive all multicast packets (and more particularly no unicast packets). Secondly, the layer-2 MAC stack, as known to those skilled in the art, can be modified to make it appear that the received data packet was transmitted on the Ethernet broadcast address. This enables all incoming packets to have their received Ethernet addresses overwritten with the Ethernet broadcast address.

Advantageously, by implementing the preferred embodiment of the present invention in this manner, only minor software modifications are required to existing router products.

A skilled artisan will appreciate that, in the same context, or indeed another context, and/or for the same application or another application, alternative mechanisms can be used to modify multicast addresses.

Thus, more generally, the above elements may be implemented in the respective routers in any suitable manner. For example, new apparatus may be added to a conventional router, or alternatively existing parts of a conventional router may be adapted, for example by reprogramming one or more processors therein. As such, the required implementation (or adaptation of existing router(s)) may be implemented in the form of processor-implementable instructions stored on a storage medium, such as a floppy disk, hard disk, programmable read only memory (PROM), random access memory (RAM) or any combination of these or other storage media.

In the case of other network infrastructures, wireless or wireline, implementation of the aforementioned data routing and processing operations may be performed at any appropriate node such as any other appropriate type of server, database, gateway, etc. Alternatively, the aforementioned steps may be carried out by various components distributed at different locations or entities within any suitable network or system.

It is envisaged that one application of the aforementioned inventive concepts could be as part of a voice logging solution within a Voice over multicast IP network, such as Motorola's™ TETRA-based Dimetra™ network. In such a scenario, the UDP Multicast Helper function would monitor the IP backbone for any multicast data packets. The detected packets are forwarded to the UDP Multicast Helper function in the IP router, which looks for data packets with a UDP port number representing Voice-over-IP. All voice packets that are found are then forwarded to the IP address of the Voice logging application (which can then store these packets sequentially based on their source IP addresses).

It is envisaged that another useful application would be for 'discrete glistening'. This is a surveillance function in voice communication networks, where the Network Operator listens in to a voice call on behalf of the police or security services, without the call members being aware. Once the Network Operator knows the identify of the multicast group carrying the voice traffic to be monitored, the Multicast Helper function can be configured to forward this multicast channel to an appropriate logging device. The load-sharing enhancement described above can also be used to provide a coverage-based logging solution in a cellular network, i.e. discrete listening on all voice traffic originating from a nominated base station.

Furthermore, it is envisaged that the inventive concepts can be used for diagnostic equipment, where a simple protocol analyser is required to monitor activity on one or more multicast channels, whether they are voice traffic or control data channels. The Multicast Helper function can be used to filter out the IP data packets nominated for monitoring, and forward them to the unicast address where the protocol analyser is located.

When a transmission link breaks in a network, the break is detected by the network routers, which then have to converge (i.e. set up alternative routing paths through the network to bypass the fault). It is usual that the unicast domain converges much more quickly than the multicast domain, since routing in the unicast domain is simpler to set up. Utilising the inventive concepts hereinbefore described, it would be possible to configure the Multicast Helper function such that, when a multicast connection fails due to a network transmission link failure, the Helper routes the multicast traffic in the unicast domain instead. A significant benefit here is that some users may be charged a premium rate to subscribe to a broadcast service. Thus, in this context, when the link fails the premium rate users have their service resumed much more quickly because they start to receive backup data via the unicast domain.

It will be understood that the mechanism to support multicast services in a mixed multicast-unicast data communication system, as described above, tends to provide at least one or more of the following advantages:
(i) It avoids the need for the router to be aware of multicast protocols and routing states;
(ii) It allows a simple unicast-capable host to receive the forwarded packets instead of requiring a more complex multicast-capable host, by replacing the destination multicast address with one or more destination unicast addresses;
(iii) A less complex IP router design can be used, as it does not need to be multicast-aware;
(iv) Scalability;
(v) Reduces signalling load in the network, and processing load in the router and host;
(vi) Less complex destination host design, as it does not need to be multicast-aware;
(vii) Allows reuse of legacy equipment (i.e. unicast-only hosts can still be used in a multi-cast environment); and
(vii) Routing of information to a single endpoint can be achieved more efficiently by converting a multicast transmission into a unicast transmission.

Thus, a Multicast data communication system has been described having an enhanced IP router that receives multicast data packets from an IP stack on one port and filters these packets into unicast messages before forwarding them to the IP stack on one or more other ports.

Whilst the specific and preferred implementations of the embodiments of the present invention are described above, it is clear that one skilled in the art could readily apply variations and modifications of such inventive concepts.

Thus, an improved data communication system, router and mechanism to support multicast services in a mixed multicast-unicast data communication system have been described wherein the abovementioned disadvantages associated with prior art arrangements have been substantially alleviated.

## Claims

1. A multicast data router (110) for use in a multicast data communication system (100), the router comprising a processor (210, 215) operable to receive and decode at least one multicast data packet and to:
(i) route the at least one multicast data packet towards multiple multicast capable receivers that have requested to receive the at least one multicast data packet; and
(ii) translate the destination multicast address of the decoded at least one multicast data packet into one or more unicast destination addresses;
wherein the processor (210) is operable to select a subset of all received multicast data packets for translation based on an IP header of the data packets and to replace a destination multicast address of the selected packets with the unicast address of a unicast-capable host that has not requested to receive the multicast data packets.

2. A multicast data router (110) according to claim 1, further **characterised in that** the processor (210) is operable to select those multicast data packets having at least one particular multicast destination channel.

3. A multicast data router (110) according to claim 2, wherein the processor (210) is operable to select only those multicast data packets having a particular multicast protocol port.

4. A multicast data router (110) according to any one of the preceding claims, wherein the router is operable to forward data packets to different hosts having different unicast addresses depending on the source address of the data packets.

5. A multicast data router (110) according to any one of the preceding claims, wherein the processor (210) is configured to receive only multicast addressed data packets and translates a multicast address of the decoded at least one multicast data packet into one or more unicast addresses.

6. A multicast data router (110) according to claim 5, wherein the processor (210) is configured to modify a layer-2 medium access control stack of the router (110) to overwrite multicast addresses of incoming data packets with a broadcast address.

7. A multicast data router (110) according to any one of the preceding claims, wherein the router is operable to receive multicast packets at an input IP stack, and filter the packets to give unicast messages before forwarding the packets to one or more output ports.

8. A multicast data router (110) according to any one of the preceding claims, wherein the router is further operable to forward multicast data packets to a plurality of hosts that have requested them.

9. A multicast data router (110) according to any one of the preceding claims, wherein the processor (210) is operable to route multicast data packets converted to unicast data packets to a single endpoint.

10. A method (300) of routing multicast data in a multicast data communication system (100), the method including the steps of:
a multicast router (110) according to any one of the preceding claims receiving (305) and decoding (310) at least one multicast data packet; and
the processor (210) of the multicast router:
(i) routing the at least one multicast data packet towards multiple multicast capable receivers that have requested to receive the at least one multicast data packet; and
(ii) translating a multicast address of the decoded at least one multicast data packet into one or more unicast addresses;
wherein the processor (210, 215) of the router:
selects (315, 320) a subset of all received multicast data packets for translation based on an IP header of the data packets;
replaces (325) a destination multicast address of the selected packets with the unicast address of a unicast-capable host that has not requested to receive the data packets; and
routes (330) the selected multicast data packets by use of the unicast address to the unicast-capable host.

11. A method according to claim 10, including the multicast router (110) selecting data packets by selecting those multicast data packets having at least one particular multicast destination channel and a particular multicast protocol port.

12. A method according to claim 10 or claim 11, the multicast data communication system including a unicast capable host that is a voice logger and the method including the router (110) detecting multicast data packets which, based on the particular multicast protocol port, represent voice over IP (VoIP) data packets and responsively forwarding the VoIP data packets via unicast transmissions to the voice logger for logging.

13. A multicast data communication system including a multicast router (110) according to any one of claims 1 to 9.

14. A multicast data communication system according to claim 13 wherein the multicast system comprises a voice over multicast IP network.

15. A multicast data communication system in accordance with claim 13 or claim 14, when dependent on claim 3 or claim 4, including a unicast capable host that is a voice logger and wherein the router (110) is operable to detect multicast data packets which, based on the particular multicast protocol port, represent voice over IP (VoIP) data packets and to responsively forward the VoIP data packets via unicast transmissions to the voice logger for logging.

## Patentansprüche

1. Multicast-Datenrouter (110) zur Verwendung in einem Multicast-Datenkommunikationssystem (100), wobei der Router einen Prozessor (210, 215) umfasst, der betreibbar ist, um mindestens ein Multicast-Datenpaket zu empfangen und zu decodieren und um:
(i) das mindestens eine Multicast-Datenpaket zu mehreren multicastfähigen Empfängern zu routen, die angefordert haben, das mindestens eine Multicast-Datenpaket zu empfangen; und
(ii) die Multicast-Zieladresse des decodierten mindestens einen Multicast-Datenpaketes in eine oder mehrere Unicast-Zieladressen zu übersetzen;
wobei der Prozessor (210) betreibbar ist, um eine Untermenge aller empfangenen Multicast-Datenpakete zur Übersetzung auszuwählen, basierend auf einem IP-Header des Datenpaketes, und eine Multicast-Zieladresse der ausgewählten Pakete durch die Unicast-Adresse eines unicastfähigen Hosts zu ersetzen, der nicht angefordert hat, die Multicast-Datenpakete zu empfangen.

2. Multicast-Datenrouter (110) gemäß Anspruch 1, weiterhin **dadurch gekennzeichnet, dass** der Prozessor (210) betreibbar ist, um solche Multicast-Datenpakete auszuwählen, die über mindestens einen bestimmten Multicast-Zielkanal verfügen.

3. Multicast-Datenrouter (110) gemäß Anspruch 2, wobei der Prozessor (210) betreibbar ist, um nur solche Multicast-Datenpakete auszuwählen, die über einen bestimmten Multicast-Protokollanschluß verfügen.

4. Multicast-Datenrouter (110) gemäß einem der vorangehenden Ansprüche, wobei der Router betreibbar ist, um Datenpakete an bestimmte Hosts weiterzuleiten, die über verschiedene Unicast-Adressen verfügen, je nach der Quelladresse der Datenpakete.

5. Multicast-Datenrouter (110) gemäß einem der vorangehenden Ansprüche, wobei der Prozessor (210) geeignet ist, um ausschließlich multicastadressierte Datenpakete zu empfangen und eine Multicast-Adresse des decodierten mindestens einen Multicast-Datenpaketes in eine oder mehrere Unicast-Adressen übersetzt.

6. Multicast-Datenrouter (110) gemäß Anspruch 5, wobei der Prozessor (210) konfiguriert ist, einen Schicht-2-Mediumzugriffssteuerstapel des Routers (110) zu modifizieren, um Multicast-Adressen von eingehenden Datenpaketen mit einer Rundfunkadresse zu überschreiben.

7. Multicast-Datenrouter (110) gemäß einem der vorangehenden Ansprüche, wobei der Router betreibbar ist, um Multicast-Pakete bei einem Eingangs-IP-Stapel zu empfangen und die Pakete zu filtern, um vor einem Weiterleiten der Pakete an einen oder mehrere Ausgangsanschlüsse Unicast-Nachrichten zu geben.

8. Multicast-Datenrouter (110) gemäß einem der vorangehenden Ansprüche, wobei der Router weiterhin betreibbar ist, um Multicast-Datenpakete zu einer Mehrzahl von Hosts weiterzuleiten, die sie angefordert haben.

9. Multicast-Datenrouter (110) gemäß einem der vorangehenden Ansprüche, wobei der Prozessor (210) betreibbar ist, um Multicast-Datenpakete, die zu Unicast-Datenpaketen gewandelt worden sind, zu einem einzelnen Endpunkt zu routen.

10. Verfahren (300) zum Routen von Multicast-Daten in einem Multicast-Datenkommunikationssystem (100), wobei das Verfahren die folgenden Schritte umfasst:
dass ein Multicast-Router (110) gemäß einem der vorangehenden Ansprüche mindestens ein Multicast-Datenpaket empfängt (305) und decodiert (310); und
der Prozessor (210) des Multicast-Routers:
(i) das mindestens eine Multicast-Datenpaket zu mehreren multicastfähigen Empfängern routet, die angefordert haben, das mindestens eine Multicast-Datenpaket zu empfangen; und
(ii) eine Multicast-Adresse des decodierten mindestens einen Multicast-Datenpaketes in eine oder mehrere Unicast-Adressen übersetzt;
wobei der Prozessor (210, 215) des Routers:
eine Untermenge von allen empfangenen Multicast-Datenpaketen zur Übersetzung auswählt (315, 320), basierend auf einem IP-Header der Datenpakete;
eine Multicast-Zieladresse der ausgewählten Pakete durch die Unicast-Adresse eines unicastfähigen Hosts ersetzt (325), der nicht angefordert hat, die Datenpakete zu empfangen; und
die ausgewählten Multicast-Datenpakete unter Verwendung der Unicast-Adresse zu dem unicastfähigen Host routet (330).

11. Verfahren gemäß Anspruch 10, das umfasst, dass der Multicast-Router (110) Datenpakete durch Auswählen solcher Multicast-Datenpakete, die über mindestens einen bestimmten Multicast-Zielkanal und einen bestimmten Multicast-Protokollanschluß verfügen, auswählt.

12. Verfahren gemäß Anspruch 10 oder Anspruch 11, wobei das Multicast-Datenkommunikationssystem umfasst, dass ein unicastfähiger Host ein Voice-Logger ist, und das Verfahren umfasst, dass der Router (110) Multicast-Datenpakete erfasst, die, basierend auf dem bestimmten Multicast-Protokollanschluß, VoIP-Datenpakete repräsentieren (VoIP = Internet Telefonie), und in Reaktion darauf die VoIP-Datenpakete über Unicast-Übertragungen an den Voice-Logger zum Loggen weiterleitet.

13. Multicast-Datenkommunikationssystem, das einen Multicast-Router (110) gemäß einem der Ansprüche 1 bis 9 umfasst.

14. Multicast-Datenkommunikationssystem gemäß Anspruch 13, wobei das Multicast-System ein Multicast-Internettelefonie-Netzwerk umfasst.

15. Multicast-Datenkommunikationssystem gemäß Anspruch 13 oder Anspruch 14, das, wenn in Abhängigkeit von Anspruch 3 oder Anspruch 4, einen unicastfähigen Host umfasst, der ein Voice-Logger ist, und wobei der Router (110) betreibbar ist, um Multicast-Datenpakete zu erfassen, die, basierend auf dem bestimmten Multicast-Protokollanschluß, VoIP-Datenpakete repräsentieren (VoIP = Internet Telefonie), und in Reaktion darauf die VoIP-Datenpakete über Unicast-Übertragungen an den Voice-Logger zum Loggen weiterzuleiten.

## Revendications

1. Routeur de données de multidiffusion (110) à utiliser dans un système de communication de données de multidiffusion (100), le routeur comprenant un processeur (210, 215) apte à recevoir et à décoder au moins un paquet de données de multidiffusion et à :
(i) router l'au moins un paquet de données de multidiffusion vers plusieurs récepteurs aptes à la multidiffusion qui ont demandé à recevoir l'au moins un paquet de données de multidiffusion ; et
(ii) traduire l'adresse de destination de multidiffusion de l'au moins un paquet de données de multidiffusion décodé en une ou plusieurs adresses de destination de diffusion individuelle ;
dans lequel le processeur (210) est apte à sélectionner un sous-ensemble de tous les paquets de données de multidiffusion reçus pour traduction, en fonction d'un en-tête IP des paquets de données, et à remplacer une adresse de destination de multidiffusion des paquets sélectionnés par l'adresse de diffusion individuelle d'un hôte apte à la diffusion individuelle qui n'a pas demandé à recevoir les paquets de données de multidiffusion.

2. Routeur de données de multidiffusion (110) selon la revendication 1, **caractérisé en outre en ce que** le processeur (210) est apte à sélectionner les paquets de données de multidiffusion qui ont au moins un canal de destination de multidiffusion particulier.

3. Routeur de données de multidiffusion (110) selon la revendication 2, dans lequel le processeur (210) est apte à sélectionner uniquement les paquets de données de multidiffusion qui ont un port de protocole de multidiffusion particulier.

4. Routeur de données de multidiffusion (110) selon l'une quelconque des revendications précédentes, dans lequel le routeur est apte à transférer des paquets de données à des hôtes différents ayant des adresses de diffusion individuelle différentes selon l'adresse source des paquets de données.

5. Routeur de données de multidiffusion (110) selon l'une quelconque des revendications précédentes, dans lequel le processeur (210) est configuré pour recevoir uniquement des paquets de données adressées en multidiffusion et pour traduire une adresse de multidiffusion de l'au moins un paquet de données de multidiffusion décodé en une ou plusieurs adresses de diffusion individuelle.

6. Routeur de données de multidiffusion (110) selon la revendication 5, dans lequel le processeur (210) est configuré pour modifier une pile de contrôle d'accès au support de couche 2 du routeur (110) pour remplacer par écrasement les adresses de multidiffusion de paquets de données entrants par une adresse de diffusion générale.

7. Routeur de données de multidiffusion (110) selon l'une quelconque des revendications précédentes, dans lequel le routeur est apte à recevoir des paquets de multidiffusion au niveau d'une pile IP d'entrée, et à filtrer les paquets pour donner des messages de diffusion individuelle avant le transfert des paquets vers un ou plusieurs ports de sortie.

8. Routeur de données de multidiffusion (110) selon l'une quelconque des revendications précédentes, dans lequel le routeur est en outre apte à transférer des paquets de données de multidiffusion à une pluralité d'hôtes qui les ont demandé.

9. Routeur de données de multidiffusion (110) selon l'une quelconque des revendications précédentes, dans lequel le processeur (210) est apte à router des paquets de données de multidiffusion convertis en paquets de données de diffusion individuelle vers un seul point final.

10. Procédé (300) de routage de données de multidiffusion dans un système de communication de données de multidiffusion (100), le procédé comprenant les étapes selon lesquelles :
un routeur de multidiffusion (110) selon l'une quelconque des revendications précédentes reçoit (305) et décode (310) au moins un paquet de données de multidiffusion ; et
le processeur (210) du routeur de multidiffusion :
(i) route l'au moins un paquet de données de multidiffusion vers plusieurs récepteurs aptes à la multidiffusion qui ont demandé à recevoir l'au moins un paquet de données de multidiffusion ; et
(ii) traduit une adresse de multidiffusion de l'au moins un paquet de données de multidiffusion décodé en une ou plusieurs adresses de diffusion individuelle ;
dans lequel le processeur (210, 215) du routeur :
sélectionne (315, 320) un sous-ensemble de tous les paquets de données de multidiffusion reçus pour traduction, en fonction d'un en-tête IP des paquets de données ; et
remplace (325) une adresse de destination de multidiffusion des paquets sélectionnés par l'adresse de diffusion individuelle d'un hôte apte à la diffusion individuelle qui n'a pas demandé à recevoir les paquets de données ; et
route (330) les paquets de données de multidiffusion sélectionnés à l'aide de l'adresse de diffusion individuelle vers l'hôte apte à la diffusion individuelle.

11. Procédé selon la revendication 10, incluant le fait que le routeur de multidiffusion (110) sélectionne des paquets de données en sélectionnant les paquets de données de multidiffusion qui ont au moins un canal de destination de multidiffusion particulier et un port de protocole de multidiffusion particulier.

12. Procédé selon la revendication 10 ou la revendication 11, le système de communication de données de multidiffusion incluant un hôte apte à la diffusion individuelle qui est un enregistreur de voix et le procédé incluant le fait que le routeur (110) détecte des paquets de données de multidiffusion qui, selon le port de protocole de multidiffusion particulier, représentent des paquets de données de voix sur IP (VoIP), et transfère en réponse les paquets de données VoIP via des transmissions en diffusion individuelle vers l'enregistreur de voix, pour enregistrement.

13. Système de communication de données de multidiffusion incluant un routeur de multidiffusion (110) selon l'une quelconque des revendications 1 à 9.

14. Système de communication de données de multidiffusion selon la revendication 13, dans lequel le système de multidiffusion comprend un réseau voix sur IP de multidiffusion.

15. Système de communication de données de multidiffusion selon la revendication 13 ou la revendication 14, lorsqu'il dépend de la revendication 3 ou la revendication 4, incluant un hôte apte à la diffusion individuelle qui est un enregistreur de voix et dans lequel le routeur (110) est apte à détecter des paquets de données de multidiffusion qui, selon le port de protocole de multidiffusion particulier, représentent des paquets de données de voix sur IP (VoIP), et à transférer en réponse les paquets de données VoIP via des transmissions en diffusion individuelle vers l'enregistreur de voix, pour enregistrement.
